# EUROPEAN PATENT APPLICATION

(11) **EP 4 742 354 A1**
(43) Date of publication of application: **13.05.2026**
(21) Application number: 23944812.9
(22) Date of filing: 29.08.2023
(51) Int. Cl.: H01M 10/0567, H01M 10/0566, H01M 10/0525

(54) **ELECTROLYTE, BATTERY, AND ELECTRIC DEVICE**

(30) Priority: 11.07.2023 CN 202310846470
(71) Applicant: Contemporary Amperex Technology Co., Limited, Ningde, Fujian 352100 (CN)
(72) Inventor: WU, Zeli, Ningde, Fujian 352100 (CN); HAN, Changlong, Ningde, Fujian 352100 (CN); JIANG, Bin, Ningde, Fujian 352100 (CN); GUO, Jie, Ningde, Fujian 352100 (CN); WU, Qiao, Ningde, Fujian 352100 (CN); LIU, Wenhao, Ningde, Fujian 352100 (CN); HUANG, Lei, Ningde, Fujian 352100 (CN)
(74) Representative: Gong, Jinping
(86) International application number: PCT/CN2023/115467
(87) International publication number: WO 2025/010803

(57) **Abstract**

An electrolyte, a battery, and an electric device are provided, where the electrolyte includes: AₓO_{y}^{Z-} and PO₂F₂⁻, where A includes at least one of P, S, or Si, 1≤x≤2, 4≤y≤5, and 2≤z≤3.

## Description

### TECHNICAL FIELD

This application pertains to the field of secondary battery technologies and specifically relates to an electrolyte, a battery, and an electric device.

### BACKGROUND

Lithium-ion batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace.

With continuous charge and discharge cycles, the DCR (direct current resistance) of the existing lithium-ion batteries continuously increases, thus affecting the power performance of the batteries.

### SUMMARY

In view of the technical problems existing in the background, this application provides an electrolyte, with an objective to reduce a DCR growth rate of a lithium-ion battery including the electrolyte during charge and discharge cycles, thereby improving the power performance of the lithium-ion battery.

To achieve the above objective, a first aspect of this application provides an electrolyte, where the electrolyte includes: AₓO_{y}^{Z-} and PO₂F₂⁻, where A includes at least one of P, S, or Si, 1≤x≤2, 4≤y≤5, and 2≤z≤3.

The electrolyte composed according to this application can effectively reduce a DCR growth rate of a battery including the electrolyte during charge and discharge cycles, thereby improving the power performance of the lithium-ion battery.

In some embodiments of this application, AₓO_{y}^{Z-} includes at least one of PO₄³⁻, SO₄²⁻, or Si₂O₅²⁻, optionally including PO₄³⁻. This can reduce the DCR growth rate of the lithium-ion battery including the electrolyte during charge and discharge cycles.

In some embodiments of this application, based on a total mass of the electrolyte, a total mass concentration of AₓO_{y}^{Z-} and PO₂F₂⁻ is less than or equal to 2000 ppm, optionally less than or equal to 1500 ppm. This can reduce the DCR growth rate of the lithium-ion battery including the electrolyte during charge and discharge cycles.

In some embodiments of this application, based on the total mass of the electrolyte, a mass concentration of AₓO_{y}^{z-} is m, a mass concentration of PO₂F₂⁻ is n, and n/m=(10-1000):1, optionally (100-500):1. This can reduce the DCR growth rate of the lithium-ion battery including the electrolyte during charge and discharge cycles.

In some embodiments of this application, based on the total mass of the electrolyte, the mass concentration m of AₓO_{y}^{Z-} is 1 ppm-1000 ppm, optionally 1 ppm-200 ppm. This can reduce the DCR growth rate of the lithium-ion battery including the electrolyte during charge and discharge cycles.

In some embodiments of this application, based on the total mass of the electrolyte, the mass concentration n of PO₂F₂⁻ is 1 ppm-1000 ppm, optionally 1 ppm-200 ppm. This can reduce the DCR growth rate of the lithium-ion battery including the electrolyte during charge and discharge cycles.

In some embodiments of this application, the electrolyte further includes a film-forming additive. This can reduce the DCR growth rate of the lithium-ion battery including the electrolyte during charge and discharge cycles.

In some embodiments of this application, based on the total mass of the electrolyte, a mass concentration of the film-forming additive is w, and (m+n)/w is 1:(10-100), optionally 1:(20-80). This can reduce the DCR growth rate of the lithium-ion battery including the electrolyte during charge and discharge cycles.

In some embodiments of this application, the mass concentration w of the film-forming additive is 0.2%-0.5%, optionally 0.25%-0.45%. This can reduce the DCR growth rate of the lithium-ion battery including the electrolyte during charge and discharge cycles.

In some embodiments of this application, the film-forming additive includes at least one of tris(trimethylsilyl) phosphate, tris(trimethylsilyl) borate, or tris(trimethylsilyl) phosphite. This can reduce the DCR growth rate of the lithium-ion battery including the electrolyte during charge and discharge cycles.

A second aspect of this application provides a battery including the electrolyte according to the first aspect of this application. This allows the battery to have excellent power performance.

In some embodiments of this application, the battery includes a positive electrode plate, where the positive electrode active material of the positive electrode plate satisfies at least one of the following conditions:
a volume-based median particle size Dᵥ50 of the positive electrode active material is 1 µm-4 µm, optionally 1 µm-3 µm;
a BET specific surface area of the positive electrode active material is 1 m²/g-4 m²/g, optionally 1 m²/g-3 m²/g; and
a compacted density of the positive electrode active material under a pressure of 300 MPa is 3.2 g/cm³-3.8 g/cm³, optionally 3.3 g/cm³-3.6 g/cm³.

In some embodiments of this application, the battery includes a negative electrode plate, where the negative electrode active material of the negative electrode plate satisfies at least one of the following conditions:
a volume-based median particle size Dᵥ50 of the negative electrode active material is 1 µm-4 µm, optionally 1 µm-3 µm;
a BET specific surface area of the negative electrode active material is 1 m²/g-4 m²/g, optionally 1 m²/g-3 m²/g; and
a compacted density of the negative electrode active material under a pressure of 300 MPa is 1.4 g/cm³-1.8 g/cm³, optionally 1.5 g/cm³-1.7 g/cm³.

A third aspect of this application provides an electric device including the battery according to the second aspect.

Additional aspects and advantages of this application will be partially provided in the following description, partially become apparent from the following description, or be understood through the practice of this application.

### BRIEF DESCRIPTION OF DRAWINGS

Persons of ordinary skill in the art can clearly understand various other advantages and benefits by reading the detailed description of the optional embodiments below. The accompanying drawings are merely intended to illustrate the optional embodiments and are not intended to limit this application. Moreover, throughout the accompanying drawings, the same reference signs represent the same components. In the accompanying drawings:
FIG. 1 is a schematic structural diagram of a battery according to an embodiment of this application;
FIG. 2 is a schematic structural diagram of a battery module according to an embodiment of this application;
FIG. 3 is a schematic structural diagram of a battery pack according to an embodiment of this application;
FIG. 4 is an exploded view of FIG. 3; and
FIG. 5 is a schematic diagram of an electric device using a battery as a power source according to an embodiment.

### Description of reference signs:

1. secondary battery; 2. battery module; 3. battery pack; 4. upper box body; and 5. lower box body.

### DESCRIPTION OF EMBODIMENTS

The embodiments of the technical solutions of this application are described in detail below. The following embodiments are merely intended for a clearer description of the technical solutions of this application and therefore are used as just examples which do not constitute any limitations on the protection scope of this application.

Reference to "embodiment" in the specification means that specific features, structures, or characteristics described with reference to an embodiment may be included in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that some embodiments described herein may be combined with other embodiments.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual single numerical value may itself be a lower limit or an upper limit which can be combined with any other point or individual numerical value or combined with another lower limit or upper limit to form a range not expressly recorded.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

Unless otherwise defined, meanings of all technical and scientific terms used in this specification are the same as those commonly understood by persons skilled in the art of this application. The terms used in this specification of this application are merely intended to describe specific embodiments, but not to limit this application. The terms "comprise", "include", "have", and any other variations thereof in the specification, claims and brief description of drawings of this application are intended to cover non-exclusive inclusions.

Currently, from the perspective of market development, the application of lithium-ion batteries is becoming more extensive. Lithium-ion batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of lithium-ion batteries, market demands for lithium-ion batteries are also increasing.

During charge and discharge of a lithium-ion battery, lithium ions deintercalate from a positive electrode plate, migrate through an electrolyte under the action of an electric field to a negative electrode plate, and intercalate into a negative electrode active material; during discharge of the battery, lithium ions deintercalate from the negative electrode active material, migrate through the electrolyte under the action of the electric field to the positive electrode plate, and intercalate into a positive electrode active material. With charge and discharge cycles of the secondary battery, side reactions occur between the positive electrode plate and the electrolyte. On one hand, these side reactions involve participation of active lithium and cause consumption of active lithium. On the other hand, accumulation of side reaction products on a surface of the positive electrode active material makes lithium-ion transport difficult, making lithium ions unable to fully intercalate into the material, ultimately leading to the continuous loss of active lithium in the positive electrode active material, and causing DCR of the lithium-ion battery to continuously increase, thereby reducing the power performance of the battery.

In this application, the electrolyte includes AₓO_{y}^{Z-} and PO₂F₂⁻, where A includes at least one of P, S, or Si, 1≤x≤2, 4≤y≤5, and 2≤z≤3. On one hand, AₓO_{y}^{Z-} and PO₂F₂⁻ can provide A-O bonds, A=O bonds, P-O bonds, and P=O bonds. The A-O bonds, the A=O bonds, the P-O bonds, and the P=O bonds can combine with lithium ions on a surface of the positive electrode plate, thereby stabilizing active lithium in the positive electrode plate. On the other hand, due to an insufficient binding force of a central ligand A to O, AₓO_{y}^{Z-} easily loses electrons under a high voltage, and after oxidation, AₓO_{y}^{Z-} can form a film on the surface of the positive electrode plate, thereby protecting active lithium in the positive electrode plate. In addition, during charge of the battery, the P=O bonds on PO₂F₂⁻ are easily oxidized by the positive electrode active material after lithium deintercalation on the positive electrode plate. After the P=O bonds are oxidized, the remaining F ions easily combine with lithium ions, thereby alleviating the issue of poor ionic conductivity of surface products after oxidation of AₓO_{y}^{Z-}. Moreover, since the radii of F ions and lithium ions are similar, their binding energy is strong, allowing for good coverage of F ions on the surface of the positive electrode material, thereby reducing the loss of active lithium. Thus, using the electrolyte composed according to this application can effectively reduce the loss of active lithium, thereby reducing a DCR growth rate of a battery including the electrolyte during charge and discharge cycles, and improving the power performance of the battery.

An electrolyte disclosed in embodiments of this application is applied to a lithium-ion battery, and a battery disclosed in embodiments of this application can be used in electric devices using batteries as power sources or in various energy storage systems using batteries as energy storage elements. The electric devices may include but are not limited to mobile phones, tablet computers, notebook computers, electric toys, electric tools, electric bicycles, electric vehicles, ships, and spacecraft. The electric toys may include fixed or mobile electric toys, such as game consoles, electric toy cars, electric toy ships, and electric toy airplanes. The spacecraft may include airplanes, rockets, space shuttles, and spaceships, and the like.

A first aspect of this application provides an electrolyte, where the electrolyte includes: AₓO_{y}^{Z-} and PO₂F₂⁻, where A includes at least one of P, S, or Si, 1≤x≤2, 4≤y≤5, and 2≤z≤3.

This application includes at least the following beneficial effects: The electrolyte of this application includes AₓO_{y}^{Z-} and PO₂F₂⁻. On one hand, AₓO_{y}^{Z-} and PO₂F₂⁻ can provide A-O bonds, A=O bonds, P-O bonds, and P=O bonds. The A-O bonds, the A=O bonds, the P-O bonds, and the P=O bonds can combine with lithium ions on a surface of a positive electrode plate, thereby stabilizing active lithium in the positive electrode plate. On the other hand, due to an insufficient binding force of a central ligand A to O, AₓO_{y}^{Z-} easily loses electrons under a high voltage, and after oxidation, AₓO_{y}^{Z-} can form a film on the surface of the positive electrode plate, thereby protecting active lithium in the positive electrode plate. In addition, during charge of a battery, the P=O bonds on PO₂F₂⁻ are easily oxidized by a positive electrode active material after lithium deintercalation on the positive electrode plate. After the P=O bonds are oxidized, the remaining F ions easily combine with lithium ions, thereby alleviating the issue of poor ionic conductivity of surface products after oxidation of AₓO_{y}^{Z-}. Moreover, since the radii of F ions and lithium ions are similar, their binding energy is strong, allowing for good coverage of F ions on the surface of the positive electrode material, thereby reducing the loss of active lithium. Thus, using the electrolyte composed according to this application can effectively reduce the loss of active lithium, reducing a DCR growth rate of a battery including the electrolyte during charge and discharge cycles, thereby improving the power performance of the battery.

In some embodiments of this application, in AₓO_{y}^{Z-}, A may include at least one of P, S, or Si, 1≤x≤2, 4≤y≤5, and 2≤z≤3. For example, x is 1 or 2, y is 4 or 5, and z is 2 or 3. As an example, AₓO_{y}^{Z-} may include at least one of PO₄³⁻, SO₄²⁻, or Si₂O₅²⁻. Thus, the A-O bonds and A=O bonds provided by the above-composed AₓO_{y}^{Z-} can combine with lithium ions on the surface of the positive electrode plate, thereby stabilizing active lithium in the positive electrode plate. In addition, due to the insufficient binding force of the central ligand A to O, AₓO_{y}^{Z-} easily loses electrons, and after oxidation, AₓO_{y}^{Z-} forms a film on the surface of the positive electrode plate, thereby protecting active lithium in the positive electrode plate. In some other embodiments of this application, AₓO_{y}^{Z-} may include PO₄³⁻.

It should be noted that, in this application, AₓO_{y}^{Z-} and PO₂F₂⁻ are added to the electrolyte in a form of a lithium salt, such as Li₃PO₄, Li₂SO₄, Li₂Si₂O₅, and LiPO₂F₂.

In some embodiments of this application, based on a total mass of the electrolyte, a total mass concentration of AₓO_{y}^{Z-} and PO₂F₂⁻ is less than or equal to 2000 ppm, for example, 2 ppm-2000 ppm, 10 ppm-2000 ppm, 50 ppm-2000 ppm, 100 ppm-2000 ppm, 200 ppm-2000 ppm, 300 ppm-2000 ppm, 400 ppm-2000 ppm, 500 ppm-2000 ppm, 600 ppm-2000 ppm, 700 ppm-2000 ppm, 800 ppm-2000 ppm, 900 ppm-2000 ppm, 1000 ppm-2000 ppm, 1100 ppm-1900 ppm, 1200 ppm-1800 ppm, 1300 ppm-1700 ppm, 1400 ppm-1600 ppm, or 1400 ppm-1500 ppm. Thus, controlling the total mass concentration of AₓO_{y}^{Z-} and PO₂F₂⁻ in the electrolyte within the above range can not only prolong the cycle life of the battery but also reduce the DCR growth rate of the lithium-ion battery during charge and discharge cycles, thereby improving the power performance of the lithium-ion battery. In some other embodiments of this application, based on the total mass of the electrolyte, the total mass concentration of AₓO_{y}^{Z-} and PO₂F₂⁻ is less than or equal to 1500 ppm.

It should be noted that "ppm" refers to a mass concentration, which is a ratio of a total mass of AₓO_{y}^{Z-} and PO₂F₂⁻ to a mass of the electrolyte, where 1 ppm=0.0001%. In addition, in this application, mass concentrations of AₓO_{y}^{Z-} and PO₂F₂⁻ in the electrolyte can be tested using instruments and methods known in the art. For example, test can be performed using ion chromatography, an instrument is an ICS-900 ion chromatograph, and a test method specifically refers to GB/T36240-2018.

In some embodiments of this application, based on the total mass of the electrolyte, a mass concentration of AₓO_{y}^{Z-} is m, a mass concentration of PO₂F₂⁻ is n, and n/m=(10-1000):1, for example, (20-980):1, (30-950):1, (40-920):1, (50-900):1, (80-880):1, (100-850):1, (120-820):1, (150-800):1, (180-780):1, (200-750):1, (250-700):1, (300-650):1, (350-600):1, (400-550):1, (450-500):1, or (480-500):1. Thus, in this application, controlling the ratio n/m of the mass concentration n of PO₂F₂⁻ to the mass concentration m of AₓO_{y}^{Z-} in the electrolyte within the above range can reduce gas production while reducing the DCR growth rate of the lithium-ion battery during charge and discharge cycles, thereby improving the power performance and cycling performance of the lithium-ion battery. In some other embodiments of this application, based on the total mass of the electrolyte, the mass concentration m of AₓO_{y}^{Z-} and the mass concentration n of PO₂F₂⁻ satisfy: n/m=(100-500):1.

In some embodiments of this application, based on the total mass of the electrolyte, the mass concentration m of AₓO_{y}^{Z-} is 1 ppm-1000 ppm, for example, 2 ppm-1000 ppm, 5 ppm-1000 ppm, 10 ppm-1000 ppm, 50 ppm-1000 ppm, 80 ppm-1000 ppm, 100 ppm-1000 ppm, 120 ppm-1000 ppm, 150 ppm-1000 ppm, 170 ppm-1000 ppm, 200 ppm-1000 ppm, 300 ppm-1000 ppm, 400 ppm-1000 ppm, 500 ppm-1000 ppm, 600 ppm-1000 ppm, 700 ppm-1000 ppm, 800 ppm-1000 ppm, or 900 ppm-1000 ppm. Thus, in this application, controlling the mass concentration of AₓO_{y}^{Z-} in the electrolyte within the above range can reduce the DCR growth rate of the lithium-ion battery during charge and discharge cycles while alleviating degradation of gas production, thereby improving the power performance and cycling performance of the lithium-ion battery. In some other embodiments of this application, based on the total mass of the electrolyte, the mass concentration m of AₓO_{y}^{Z-} is 1 ppm-200 ppm.

In some embodiments of this application, based on the total mass of the electrolyte, the mass concentration n of PO₂F₂⁻ is 1 ppm-1000 ppm, for example, 2 ppm-1000 ppm, 5 ppm-1000 ppm, 10 ppm-1000 ppm, 50 ppm-1000 ppm, 80 ppm-1000 ppm, 100 ppm-1000 ppm, 120 ppm-1000 ppm, 150 ppm-1000 ppm, 170 ppm-1000 ppm, 200 ppm-1000 ppm, 300 ppm-1000 ppm, 400 ppm-1000 ppm, 500 ppm-1000 ppm, 600 ppm-1000 ppm, 700 ppm-1000 ppm, 800 ppm-1000 ppm, or 900 ppm-1000 ppm. Thus, in this application, controlling the mass concentration of PO₂F₂⁻ in the electrolyte within the above range can reduce the DCR growth rate of the lithium-ion battery during charge and discharge cycles, thereby improving the power performance of the lithium-ion battery. In some other embodiments of this application, based on the total mass of the electrolyte, the mass concentration n of PO₂F₂⁻ is 1 ppm-200 ppm.

In some embodiments of this application, the electrolyte may further include a film-forming additive. Specifically, the "film-forming additive" can be understood as a substance added to the electrolyte to facilitate the formation of a CEI (cathode electrolyte interphase) film on a surface of a positive electrode plate and/or an SEI (solid electrolyte interphase) film on a surface of a negative electrode plate. The film-forming additive added to the electrolyte in this application, in synergy with AₓO_{y}^{Z-} and PO₂F₂⁻, facilitates film formation on the surface of the positive electrode plate, effectively reducing the loss of active lithium, thereby reducing the DCR growth rate of the battery including the electrolyte during charge and discharge cycles, and improving the power performance of the battery.

In some embodiments of this application, based on the total mass of the electrolyte, a mass concentration of the film-forming additive is w, and (m+n)/w is 1:(10-100), for example, 1:(15-95), 1:(20-90), 1:(25-85), 1:(30-80), 1:(35-75), 1:(40-70), 1:(45-65), 1:(50-60), or 1:(55-60). Thus, in this application, controlling a ratio of the total mass concentration of AₓO_{y}^{Z-} and PO₂F2⁻ to the mass concentration of the film-forming additive in the electrolyte within the above range can reduce the DCR growth rate of the lithium-ion battery during charge and discharge cycles, thereby improving the power performance of the lithium-ion battery. In some other embodiments of this application, the mass concentration m of AₓO_{y}^{Z-}, the mass concentration n of PO₂F₂⁻, and the mass concentration w of the film-forming additive satisfy: (m+n)/w is 1:(20-80).

In some embodiments of this application, the mass concentration w of the film-forming additive is 0.2%-0.5%, for example, 0.22%-0.48%, 0.25%-0.45%, 0.27%-0.42%, 0.3%-0.4%, 0.32%-0.38%, or 0.35%-0.37%. Thus, in this application, controlling the mass concentration w of the film-forming additive in the electrolyte within the above range can reduce the DCR growth rate of the lithium-ion battery during charge and discharge cycles, thereby improving the power performance of the lithium-ion battery. In some other embodiments of this application, the mass concentration w of the film-forming additive is 0.25%-0.45%.

It should be noted that, in this application, the concentration of the film-forming additive in the electrolyte can be tested using instruments and methods known in the art, for example, using organic gas chromatography.

As an example, the film-forming additive may include at least one of tris(trimethylsilyl) phosphate, tris(trimethylsilyl) borate, or tris(trimethylsilyl) phosphite.

The electrolyte may further include an electrolytic salt and a solvent.

As an example, the electrolytic salt may include at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro(bisoxalato)phosphate (LiDFOP), or lithium tetrafluoro(oxalato)phosphate (LiTFOP).

As an example, the solvent may include at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma butyrolactone (GBL), sulfolane (SF), methyl sulfonyl methane (MSM), ethyl methyl sulfone (EMS), or ethyl sulfonyl ethane (ESE).

In some embodiments, the electrolyte may further include an additive that can improve some performance of the battery, for example, an additive for improving overcharge performance of the battery, an additive for improving high-temperature performance of the battery, or an additive for improving low-temperature performance of the battery.

A second aspect of this application provides a battery including the electrolyte according to the first aspect of this application. This allows the battery to have low direct current resistance and excellent power performance.

The battery refers to a battery whose active material can be activated for continuous use through charging after the battery is discharged.

Typically, a battery includes a positive electrode plate, a negative electrode plate, a separator, and an electrolyte. During charge and discharge of the battery, active ions intercalate and deintercalate back and forth between the positive electrode plate and the negative electrode plate. The separator is disposed between the positive electrode plate and the negative electrode plate for separation. The electrolyte conducts ions between the positive electrode plate and the negative electrode plate.

In some embodiments of this application, the battery may be a lithium-ion battery.

### [Positive electrode plate]

In the battery, the positive electrode plate typically includes a positive electrode current collector and a positive electrode active material layer disposed on the positive electrode current collector, where the positive electrode active material layer includes a positive electrode active material.

The positive electrode current collector may be a conventional metal foil or a composite current collector (for example, a metal material may be disposed on a polymer substrate to form a composite current collector). As an example, an aluminum foil may be used as the positive electrode current collector.

A specific type of the positive electrode active material is not limited. An active material known in the art and used for a positive electrode of a secondary battery can be used, and persons skilled in the art may make choices based on actual needs.

As an example, the positive electrode active material may include but is not limited to at least one of lithium transition metal oxide, lithium-containing phosphate with an olivine structure, or respective modified compounds thereof. Examples of lithium transition metal oxide may include but are not limited to at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of lithium-containing phosphate with an olivine structure may include but are not limited to at least one of lithium iron phosphate, a composite of lithium iron phosphate and carbon, lithium manganese phosphate, a composite of lithium manganese phosphate and carbon, lithium iron manganese phosphate, a composite of lithium iron manganese phosphate and carbon, and modified compounds thereof. These materials are all commercially available.

In some embodiments of this application, a volume-based median particle size Dᵥ50 of the positive electrode active material is 1 µm-4 µm. For example, the volume-based median particle size Dᵥ50 of the positive electrode active material may be 1 µm-3 µm or 2 µm-3 µm. In some other embodiments of this application, the volume-based median particle size Dᵥ50 of the positive electrode active material is 1 µm-3 µm.

In this application, the volume-based median particle size Dᵥ50 refers to a corresponding particle size when the cumulative volume distribution percentage reaches 50%. For example, the volume-based median particle size Dᵥ50 is tested in accordance with standard GB/T 19077-2016 using a laser particle size analyzer (for example, Malvern Master Size 3000).

In some embodiments of this application, a BET specific surface area of the positive electrode active material is 1 m²/g-4 m²/g. For example, the specific surface area of the positive electrode active material may be 1.5 m²/g-3.5 m²/g, 2 m²/g-3 m²/g, 2.5 m²/g-3 m²/g, or 2.8 m²/g-3 m²/g. In some other embodiments of this application, the BET specific surface area of the positive electrode active material is 1 m²/g-3 m²/g.

In this application, the specific surface area of the positive electrode active material can be tested using the following method: A Micromeritics multi-station fully automatic specific surface area and porosity analyzer Gemini VII2390, approximately 7 g of a sample is placed in a 9 cc long tube with a bulb, degassing is performed at 200°C for 2 h, and then the sample is placed in a main instrument for testing to obtain the BET (specific surface area) data of the positive electrode active material.

In some embodiments of this application, a compacted density of the positive electrode active material under a pressure of 300 MPa is 3.2 g/cm³-3.8 g/cm³. For example, the compacted density of the positive electrode active material under the pressure of 300 MPa may be 3.2 g/cm³-3.7 g/cm³, 3.3 g/cm³-3.6 g/cm³, or 3.4 g/cm³-3.5 g/cm³. In some embodiments of this application, the compacted density of the positive electrode active material under the pressure of 300 MPa is 3.3 g/cm³-3.6 g/cm³.

In this application, the "compacted density" has the meaning known in the art and can be tested using instruments and methods known in the art, for example, using the following test method: A quantitative mass m of powder is placed in a dedicated compaction mold, the mold is placed on a compacted density instrument, a pressure of 300 MPa is set, a volume v of the powder under the pressure of 300 MPa is tested on the instrument, and the compacted density is calculated as density=mass m/volume v (specifically referring to GB/T24533-2009).

Specifically, when at least one of the volume-based median particle size Dᵥ50, specific surface area, or compacted density under the pressure of 300 MPa of the positive electrode active material of this application is within the above ranges, a conduction distance within the positive electrode active material is short, and surface side reactions are few, helping the positive electrode active material to exert its specific capacity, and increasing a capacity retention rate of a battery including the positive electrode active material.

### [Negative electrode plate]

In the battery, the negative electrode plate typically includes a negative electrode current collector and a negative electrode active material layer disposed on the negative electrode current collector, where the negative electrode active material layer includes a negative electrode active material.

The negative electrode current collector may be a conventional metal foil or a composite current collector (for example, a metal material may be disposed on a polymer substrate to form a composite current collector). As an example, a copper foil may be used as the negative electrode current collector.

A specific type of the negative electrode active material is not limited. An active material known in the art and used for a negative electrode of a secondary battery can be used, and persons skilled in the art may make choices based on actual needs. As an example, the negative electrode active material may include but is not limited to at least one of artificial graphite, natural graphite, hard carbon, soft carbon, a silicon-based material, and a tin-based material. The silicon-based material may include at least one of elemental silicon, a silicon-oxygen compound (for example, silicon monoxide), a silicon-carbon composite, a silicon-nitrogen composite, and a silicon alloy. The tin-based material may include at least one of elemental tin, a tin-oxygen compound, and a tin alloy. These materials are all commercially available.

In some embodiments, to further increase the energy density of the battery, the negative electrode active material may include a silicon-based material.

In some embodiments of this application, a volume-based median particle size Dᵥ50 of the negative electrode active material is 1 µm-4 µm. For example, the volume-based median particle size Dᵥ50 of the negative electrode active material may be 1 µm-3 µm or 2 µm-3 µm. In some other embodiments of this application, the volume-based median particle size Dᵥ50 of the negative electrode active material is 1 µm-3 µm.

In this application, the meaning and test method of the volume-based median particle size Dᵥ50 of the negative electrode active material can refer to the meaning and test method of the volume-based median particle size Dᵥ50 of the positive electrode active material.

In some embodiments of this application, a BET specific surface area of the negative electrode active material is 1 m²/g-4 m²/g. For example, the specific surface area of the negative electrode active material may be 1.5 m²/g-3.5 m²/g, 2 m²/g-3 m²/g, 2.5 m²/g-3 m²/g, or 2.8 m²/g-3 m²/g. In some other embodiments of this application, the BET specific surface area of the negative electrode active material is 1 m²/g-3 m²/g.

In this application, the test method for the BET specific surface area of the negative electrode active material can refer to the test method for the BET specific surface area of the positive electrode active material.

In some embodiments of this application, a compacted density of the negative electrode plate is 1.4 g/cm³-1.8 g/cm³, for example, 1.4 g/cm³-1.7 g/cm³, 1.5 g/cm³-1.7 g/cm³, or 1.6 g/cm³-1.7 g/cm³. In some other embodiments of this application, the compacted density of the negative electrode plate is 1.5 g/cm³-1.7 g/cm³. This can improve the cycling performance of a battery including the negative electrode plate.

In this application, the "compacted density of the negative electrode plate" has the meaning known in the art and can be tested using instruments and methods known in the art. For example, the test method can refer to the test method for the "compacted density of the positive electrode plate" described above. It is worth noting that a negative electrode is typically cleaned with deionized water to remove an active material layer.

The negative electrode active material layer typically further optionally includes a binder, a conductive agent, and other optional additives.

As an example, the conductive agent may include at least one of superconducting carbon, acetylene black, carbon black, Ketjen black, carbon dots, carbon nanotubes, graphene, and carbon nanofiber.

As an example, the binder may include at least one of styrene-butadiene rubber (SBR), water-based acrylic resin, polyvinylidene fluoride (PVDF), polytetrafluoroethylene (PTFE), ethylene-vinyl acetate copolymer (EVA), polyvinyl alcohol (PVA), and polyvinyl butyral (PVB).

As an example, the other optional additives may include a thickener, a dispersant (for example, sodium carboxymethyl cellulose CMC-Na), and a PTC thermistor material.

The foregoing separator is not particularly limited in this application, and any known porous separator with electrochemical and mechanical stability can be used based on actual needs. For example, the separator may include a single-layer or multi-layer film containing at least one of glass fiber, non-woven fabric, polyethylene, polypropylene, and polyvinylidene fluoride.

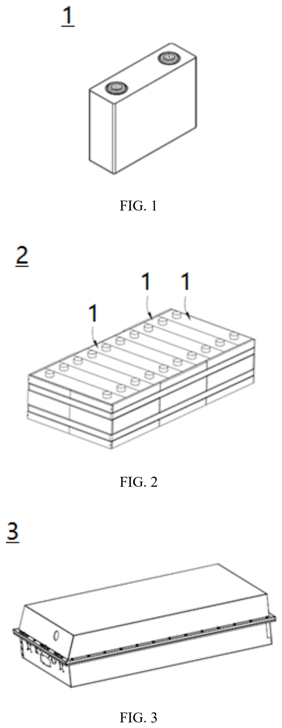

The shape of the battery is not particularly limited in the embodiments of this application, and the battery may be cylindrical, rectangular, or of any other shapes. FIG. 1 shows a secondary battery 1 with a rectangular structure as an example.

In some embodiments, the battery may include an outer package. The outer package is used for packaging the positive electrode plate, the negative electrode plate, and the electrolyte.

In some embodiments, the outer package may include a housing and a cover plate. The housing may include a bottom plate and side plates connected to the bottom plate, with the bottom plate and side plates enclosing to form an accommodating cavity. The housing has an opening communicating with the accommodating cavity, and the cover plate can cover the opening to close the accommodating cavity.

The positive electrode plate, the negative electrode plate, and the separator may be formed into an electrode assembly through a winding process or a lamination process. The electrode assembly is packaged in the accommodating cavity. There may be one or more electrode assemblies in the battery, and the quantity may be adjusted as required.

In some embodiments, the outer package of the battery may include a hard shell, for example, a hard plastic shell, an aluminum shell, or a steel shell.

The outer package of the battery may alternatively include a soft pack, for example, a soft pouch. The material of the soft pack may be plastic, for example, may include at least one of polypropylene (PP), polybutylene terephthalate (PBT), and polybutylene succinate (PBS).

In some embodiments, the battery may be assembled into a battery module, where there may be a plurality of batteries in the battery module, and the specific quantity may be adjusted based on the application and capacity of the battery module.

FIG. 2 shows a battery module 2 as an example. Referring to FIG. 2, in the battery module 2, a plurality of secondary batteries 1 may be sequentially arranged along a length direction of the battery module 2. Certainly, the secondary batteries may alternatively be arranged in any other manner. Further, the plurality of secondary batteries 1 may be fixed by fasteners.

The battery module 2 may further include an enclosure with an accommodating space, where the plurality of secondary batteries 1 are accommodated in the accommodating space. In some embodiments, the battery module may be further assembled into a battery pack, where the quantity of battery modules in the battery pack may be adjusted based on the application and capacity of the battery pack.

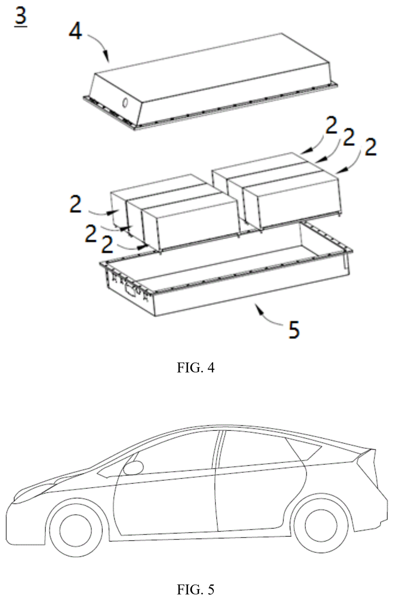

FIG. 3 and FIG. 4 show a battery pack 3 as an example. Referring to FIG. 3 and FIG. 4, the battery pack 3 may include a battery box and a plurality of battery modules 2 arranged in the battery box. The battery box includes an upper box body 4 and a lower box body 5, where the upper box body 4 fits the lower box body 5 to form a closed space for accommodating the battery modules 2. The plurality of battery modules 2 may be arranged in the battery box in any manner.

A third aspect of this application provides an electric device including the battery according to the second aspect. Specifically, the battery may serve as a power source for the electric device or as an energy storage unit for the electric device. The electric device may include but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf cart, or an electric truck), an electric train, a ship, a satellite, and an energy storage system.

FIG. 5 shows an electric device as an example. The electric device includes a battery electric vehicle, a hybrid electric vehicle, or a plug-in hybrid electric vehicle.

As another example, the electric device may include a mobile phone, a tablet computer, and a notebook computer. Such electric device is generally required to be light and thin and may use a battery as its power source.

To describe the technical problems solved by the embodiments of this application, technical solutions, and beneficial effects more clearly, the following further describes this application in detail with reference to the embodiments and accompanying drawings. Apparently, the described embodiments are only some rather than all of these embodiments of this application. The following description of at least one exemplary embodiment is merely illustrative and definitely is not construed as any limitation on this disclosure or on use of this disclosure. All other embodiments obtained by persons of ordinary skill in the art based on the embodiments of this application without creative efforts shall fall within the protection scope of this application.

### Example 1

### 1. Preparation of positive electrode plate

A positive electrode active material LiNi_{0.7}Co_{0.1}Mn_{0.1}O₂, a conductive agent Super P, and a binder polyvinylidene fluoride (PVDF) were added into in N-methylpyrrolidone (NMP) to prepared a positive electrode slurry, where a solid content of the positive electrode slurry was 50wt%, and a mass ratio of LiNi_{0.7}Co_{0.1}Mn_{0.1}O₂ Super P, and PVDF in the solid components was 8:1:1. The positive electrode slurry was applied on upper and lower surfaces of a current collector aluminum foil, dried at 85°C, and cold-pressed, followed by trimming, cutting, and slitting, and then drying under vacuum at 85°C for 4 h, to prepare a positive electrode plate.

### 3. Preparation of negative electrode plate

Graphite, a conductive agent Super P, a thickener carboxymethyl cellulose (CMC), and a binder styrene-butadiene rubber (SBR) were mixed well in deionized water to prepare a negative electrode slurry, where a solid content of the negative electrode slurry was 30wt%, and a mass ratio of graphite, silicon monoxide, Super P, CMC, and the binder styrene-butadiene rubber (SBR) in the solid components was 88:7:3:2. The negative electrode slurry was applied on upper and lower surfaces of a current collector copper foil and dried at 85°C, followed by cold pressing, trimming, cutting, slitting, and then drying under vacuum at 120°C for 12 h, to prepare a negative electrode plate.

### 3. Preparation of electrolyte

In a glove box filled with argon (water content <10 ppm, oxygen content <1 ppm), Li_{z}AₓO_{y} and LiPO₂F₂ were added to an organic solvent (the organic solvent included ethylene carbonate (EC) and ethyl methyl carbonate (EMC), with a mass ratio of EC to EMC of 3:7), and then mixed well. Then, LiPF₆ and LiFSI were slowly added. After the lithium salts were completely dissolved, an electrolyte with a lithium salt concentration of 1 mol/L was obtained.

### 4. Separator

A polyethylene film with a thickness of 16 µm was used as a separator.

### 5. Preparation of lithium-ion battery

The positive electrode plate, the separator, and the negative electrode plate were stacked sequentially, such that the separator was located between the positive and negative electrode plates to separate the positive and negative electrode plates. The resulting stack was wound to obtain a jelly roll. Tabs were welded, and the jelly roll was placed in an outer package. The prepared electrolyte was injected into the dried jelly roll, and processes such as packaging, standing, formation, shaping, and capacity testing were performed to complete the preparation of a lithium-ion battery (a soft pack lithium-ion battery with a thickness of 4.0 mm, a width of 60 mm, and a length of 140 mm).

The preparation methods of the lithium-ion batteries of Examples 2 to 39 and Comparative Examples 1 to 4 were the same as the preparation method of the lithium-ion battery of Example 1, except that the compositions of the additives in the electrolytes were different, with details specifically shown in Table 1.

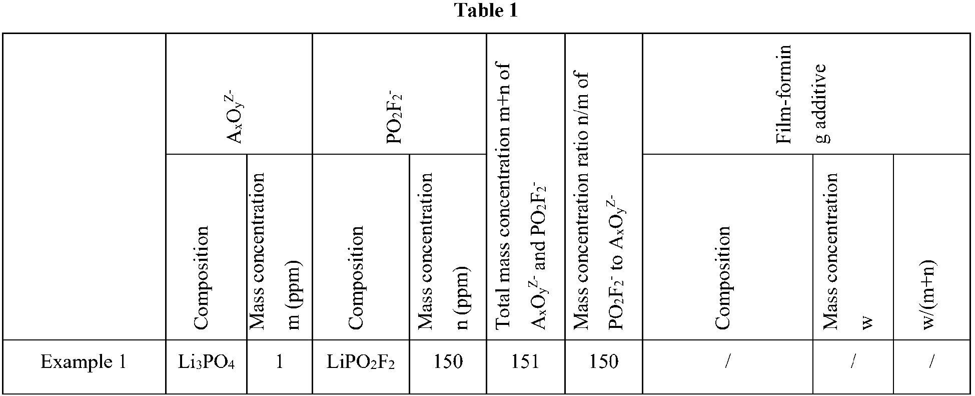

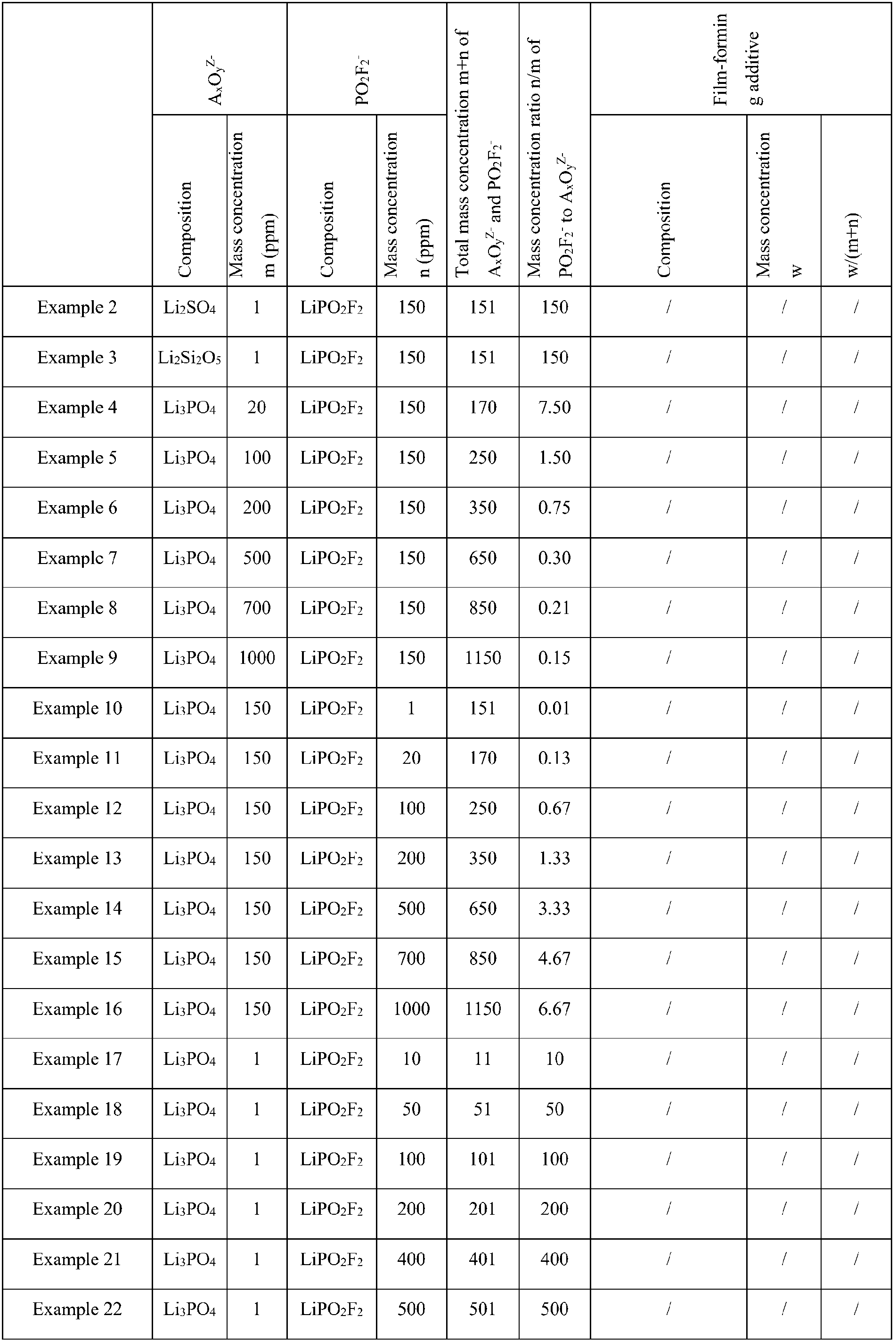

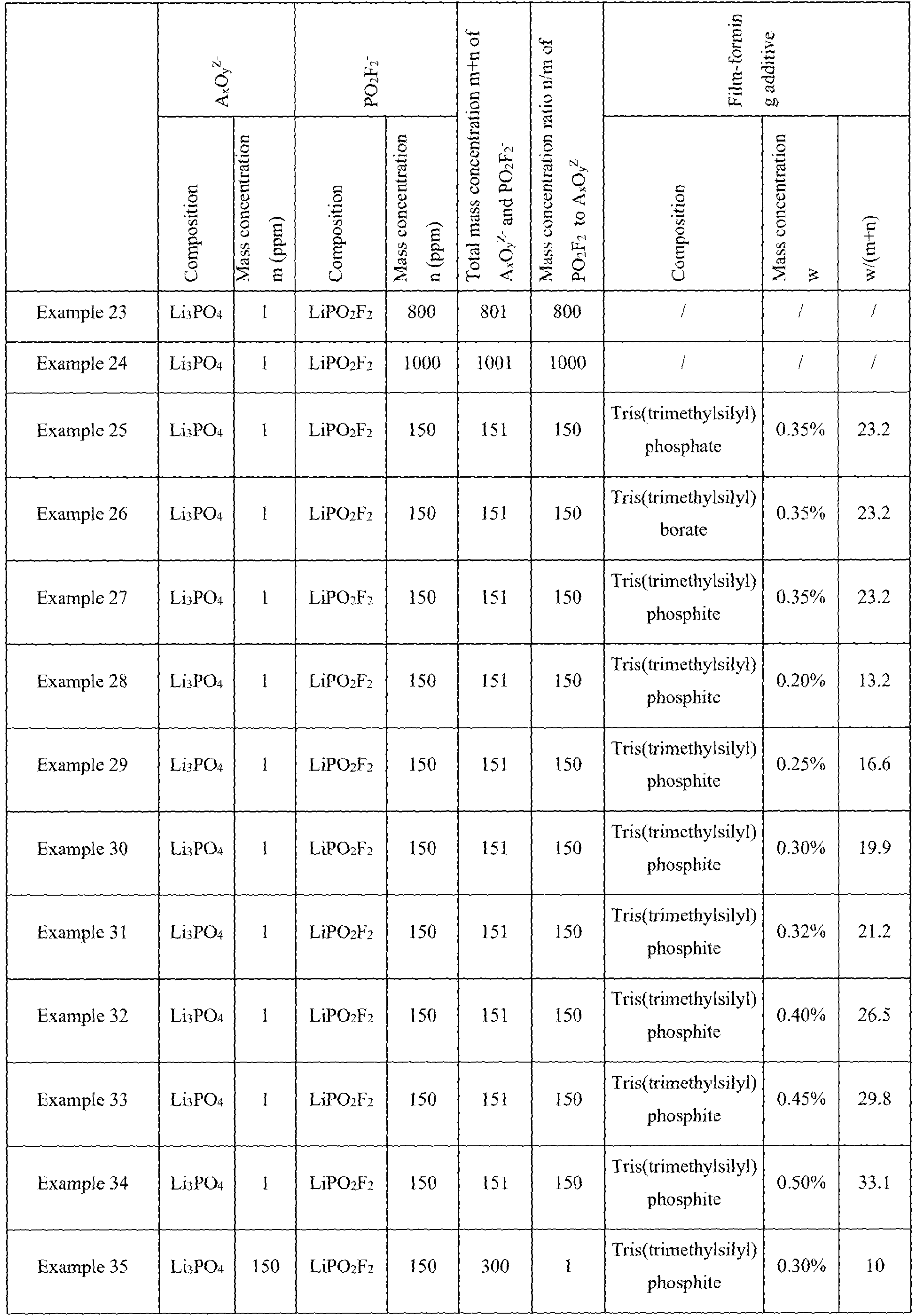

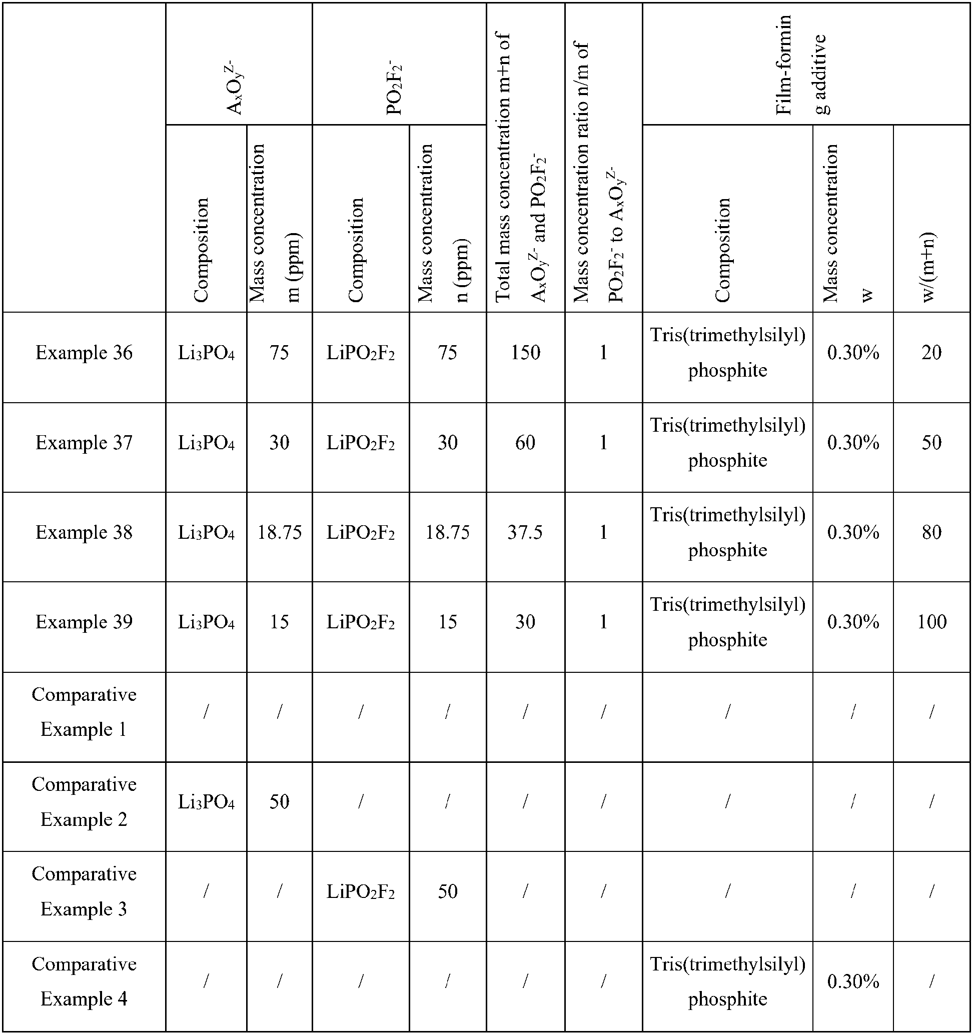

The DCR growth rates of the lithium-ion batteries obtained in Examples 1 to 39 and Comparative Examples 1 to 4 were characterized, with the characterization results shown in Table 2.

### Test method for DCR growth rate of lithium-ion battery

Before cycling of the battery, the SOC was adjusted to 50%. Then, the battery was discharged at 4C for 30s, a voltage before discharge was denoted as V1, and a voltage after discharge was denoted as V2. Calculation was performed to obtain DCR₁=(V1-V2)/I (a value of I corresponded to a current value for discharge at 4C). After 300 cycles, the battery was removed. DCR₂ was tested using a same solution, and calculation was performed to obtain ΔDCR=(DCR₂-DCR₁)/DCR₁, where ΔDCR was a DCR growth rate of the battery.

**Table 2**

| | DCR growth rate (%) |
|---|---|
| Example 1 | 18.7 |
| Example 2 | 18.9 |
| Example 3 | 19.1 |
| Example 4 | 21.3 |
| Example 5 | 21.5 |
| Example 6 | 21.7 |
| Example 7 | 23.1 |
| Example 8 | 23 |
| Example 9 | 23.5 |
| Example 10 | 19.3 |
| Example 11 | 19.2 |
| Example 12 | 19.3 |
| Example 13 | 19.1 |
| Example 14 | 21.4 |
| Example 15 | 21.6 |
| Example 16 | 21.7 |
| Example 17 | 18.8 |
| Example 18 | 18.7 |
| Example 19 | 18.8 |
| Example 20 | 18.6 |
| Example 21 | 18.6 |
| Example 22 | 18.5 |
| Example 23 | 18.7 |
| Example 24 | 18.6 |
| Example 25 | 16.3 |
| Example 26 | 16.5 |
| Example 27 | 16.2 |
| Example 28 | 17.9 |
| Example 29 | 16.7 |
| Example 30 | 16.7 |
| Example 31 | 16.6 |
| Example 32 | 16.3 |
| Example 33 | 16.1 |
| Example 34 | 17.7 |
| Example 35 | 16.8 |
| Example 36 | 14.5 |
| Example 37 | 14.4 |
| Example 38 | 14.2 |
| Example 39 | 16.9 |
| Comparative Example 1 | 29.4 |
| Comparative Example 2 | 27.3 |
| Comparative Example 3 | 25.8 |
| Comparative Example 4 | 24.7 |

It can be seen from Table 2 that the DCR growth rates of the lithium-ion batteries in Examples 1 to 39 are significantly lower than those in Comparative Examples 1 to 4, indicating that the electrolyte of this application, including AₓO_{y}^{Z-} and PO₂F₂⁻, can effectively reduce the DCR growth rate of the battery including the electrolyte during charge and discharge cycles, thereby improving the power performance of the lithium-ion battery.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. All such modifications and equivalent replacements shall fall within the scope of the claims and specification of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. An electrolyte, comprising: AₓO_{y}^{Z-} and PO₂F₂⁻, wherein A comprises at least one of P, S, or Si, 1≤x≤2, 4≤y≤5, and 2≤z≤3.

2. The electrolyte according to claim 1, wherein AₓO_{y}^{Z-} comprises at least one of PO₄³⁻, SO₄²⁻, or Si₂O₅²⁻.

3. The electrolyte according to claim 1 or 2, wherein AₓO_{y}^{Z-} comprises PO₄³⁻.

4. The electrolyte according to any one of claims 1 to 3, wherein based on a total mass of the electrolyte, a total mass concentration of AₓO_{y}^{Z-} and PO₂F₂⁻ is less than or equal to 2000 ppm.

5. The electrolyte according to any one of claims 1 to 4, wherein based on the total mass of the electrolyte, the total mass concentration of AₓO_{y}^{Z-} and PO₂F₂⁻ is less than or equal to 1500 ppm.

6. The electrolyte according to any one of claims 1 to 5, wherein based on the total mass of the electrolyte, a mass concentration of AₓO_{y}^{Z-} is m, a mass concentration of PO₂F₂⁻ is n, and n/m=(10-1000):1.

7. The electrolyte according to claim 6, wherein n/m=(100-500):1.

8. The electrolyte according to claim 6 or 7, wherein based on the total mass of the electrolyte, the mass concentration m of AₓO_{y}^{Z-} is 1 ppm-1000 ppm.

9. The electrolyte according to any one of claims 6 to 8, wherein based on the total mass of the electrolyte, the mass concentration m of AₓO_{y}^{Z-} is 1 ppm-200 ppm.

10. The electrolyte according to any one of claims 6 to 9, wherein based on the total mass of the electrolyte, the mass concentration n of PO₂F₂⁻ is 1 ppm-1000 ppm.

11. The electrolyte according to any one of claims 6 to 10, wherein based on the total mass of the electrolyte, the mass concentration n of PO₂F₂⁻ is 1 ppm-200 ppm.

12. The electrolyte according to any one of claims 6 to 11, wherein the electrolyte further comprises a film-forming additive.

13. The electrolyte according to claim 12, wherein based on the total mass of the electrolyte, a mass concentration of the film-forming additive is w, and (m+n)/w is 1:(10-100).

14. The electrolyte according to claim 13, wherein (m+n)/w is 1:(20-80).

15. The electrolyte according to claim 13 or 14, wherein the mass concentration w of the film-forming additive is 0.2%-0.5%.

16. The electrolyte according to any one of claims 13 to 15, wherein the mass concentration w of the film-forming additive is 0.25%-0.45%.

17. The electrolyte according to any one of claims 12 to 16, wherein the film-forming additive comprises at least one of tris(trimethylsilyl) phosphate, tris(trimethylsilyl) borate, or tris(trimethylsilyl) phosphite.

18. A battery, comprising the electrolyte according to any one of claims 1 to 17.

19. The battery according to claim 18, wherein the battery comprises a lithium-ion battery.

20. The battery according to claim 18 or 19, wherein the battery comprises a positive electrode plate, and a positive electrode active material of the positive electrode plate satisfies at least one of the following conditions:
a volume-based median particle size Dᵥ50 of the positive electrode active material is 1 µm-4 µm;
a BET specific surface area of the positive electrode active material is 1 m²/g-4 m²/g; and
a compacted density of the positive electrode active material under a pressure of 300 MPa is 3.2 g/cm³-3.8 g/cm³.

21. The battery according to any one of claims 18 to 20, wherein the battery comprises a negative electrode plate, and a negative electrode active material of the negative electrode plate satisfies at least one of the following conditions:
a volume-based median particle size Dᵥ50 of the negative electrode active material is 1 µm-4 µm;
a BET specific surface area of the negative electrode active material is 1 m²/g-4 m²/g; and
a compacted density of the negative electrode active material under a pressure of 300 MPa is 1.4 g/cm³-1.8 g/cm³.

22. An electric device, comprising the battery according to any one of claims 18 to 21.
